# EUROPEAN PATENT APPLICATION

(11) **EP 1 906 338 A1**
(43) Date of publication of application: **02.04.2008**
(21) Application number: 07018279.5
(22) Date of filing: 18.09.2007
(51) Int. Cl.: G06K 9/20

(54) **Method of linking information to an electronically enabled manufactured part archive**

(30) Priority: 28.09.2006 US 536002
(71) Applicant: GM Global Technology Operations, Inc., Detroit, MI 48265-3000 (US)
(72) Inventor: Lesperance, Ronald M., Troy Michigan 48098 (US); Cafeo, John A., Farmington Michigan 48336 (US); Simon, Andrea M., Wolverine Lake Michigan 48390 (US); Morgan, Alexander P., Birmingham Michigan 48009 (US)
(74) Representative: Manitz, Finsterwald & Partner GbR

(57) **Abstract**

A method of linking information to an electronically enabled manufactured part archive includes identifying an area of the electronically enabled manufactured part archive, defining the area with a geometric token, and electronically identifying information. The information may relate to at least a portion of a manufactured part which is associated with the identified area of the manufactured part archive. The method may also include electronically associating the information with the identified area and/or the geometric token, wherein the information is adapted for retrieval.

## Description

### TECHNICAL FIELD

The present disclosure relates generally to a manufactured part archive and, more particularly, to a method for linking information to the archive.

### BACKGROUND

Knowledge archives may store textual and/or graphical information. Textual information may often be effectively searched using keywords. When using textual keyword searching, users may often input a series of keywords and Boolean operators. A variety of search algorithms exist that are designed to discover the information most related to the search keywords, but even the most efficient algorithms may be mottled with shortcomings. Textual database searching is often overbroad whereby the user is presented with irrelevant results; or is often overly exclusive whereby the algorithm fails to find all relevant information. These shortcomings may be exacerbated when using textual keywords to search non-textual or graphical data.

As such, it would be desirable to provide an improved method for linking, searching, and retrieving information stored in a graphical archive.

### SUMMARY

A method of linking information to an electronically enabled manufactured part archive may include identifying an area of the electronically enabled manufactured part archive, defining the area with a geometric token, and electronically identifying information. The information may relate to at least a portion of a manufactured part, which is associated with the identified area of the manufactured part archive. The method may also include electronically associating the information with at least one of the identified area or the geometric token, wherein the information is adapted for retrieval.

### BRIEF DESCRIPTION OF THE DRAWINGS

Objects, features and advantages of embodiments of the present disclosure may become apparent by reference to the following detailed description and drawings, in which like reference numerals correspond to similar, though not necessarily identical, components. For the sake of brevity, reference numerals having a previously described function may not necessarily be described in connection with other drawings in which they appear.

Fig. 1 is a schematic diagram representing an embodiment of an electronically enabled manufactured part archive having a plurality of records organized in a hierarchical arrangement;

Fig. 2 is a flowchart depicting an embodiment of a method of linking information to an electronically enabled manufactured part archive;

Fig. 3 is a flowchart depicting an embodiment of a method of retrieving information from an electronically enabled manufactured part archive;

Fig. 4 is a flowchart depicting an alternate embodiment of a method of linking information to an electronically enabled manufactured part archive;

Fig. 5 is a schematic diagram of an embodiment of a coordinate system for a plurality of records of an electronically enabled manufactured part archive;

Fig. 6A is a graphical representation of an electronically enabled manufactured part archive record having information linked to an area;

Fig. 6B is a graphical representation of an alternate embodiment of an electronically enabled manufactured part archive record having information linked to an area;

Fig. 6C is a graphical representation of another alternate embodiment of an electronically enabled manufactured part archive record having information linked to an area;

Fig. 6D is a graphical representation of yet another alternate embodiment of an electronically enabled manufactured part archive record having information linked to an area;

Fig. 6E is a graphical representation of a similarity comparison between the area of Fig. 6A and the area of Fig. 6B;

Fig. 6F is a graphical representation of a similarity comparison between the area of Fig. 6A and the area of Fig. 6C; and

Fig. 6G is a graphical representation of a similarity comparison between the area of Fig. 6A and the area of Fig. 6D.

### DETAILED DESCRIPTION

A method of linking and retrieving information from an archive is provided whereby information and/or data may be linked with a finite location in an archive record. As such, a user may be able to search for textual information associated with such a finite area. Furthermore, a user may be able to view all information linked with a defined area of an image or to search within the information linked with a particular finite area. Such a system may advantageously provide an intuitive, visual-based means for improved linking and retrieval of information within a knowledge archive.

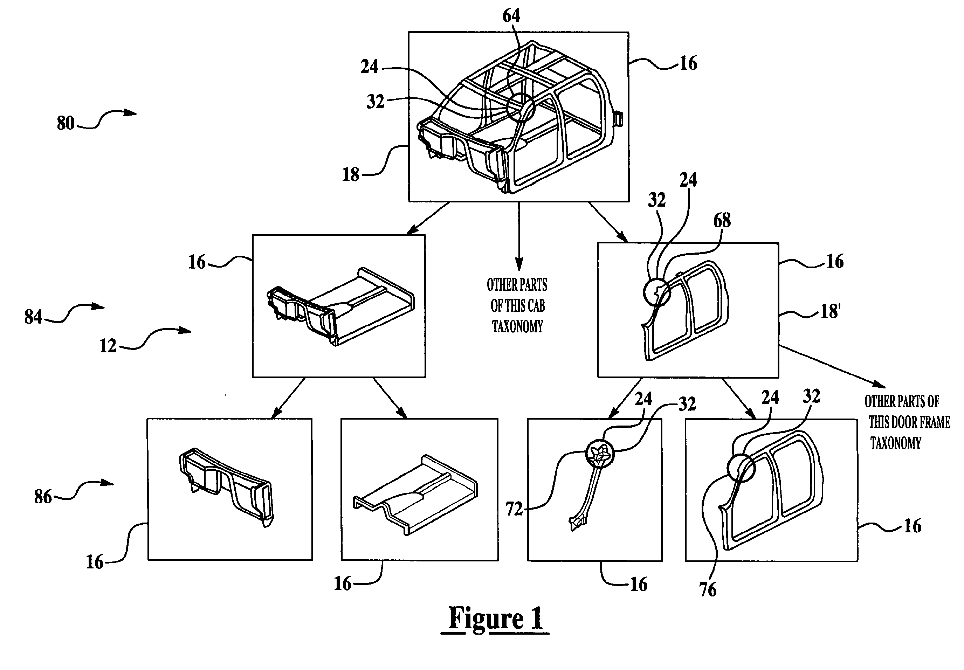

Referring to Fig. 1, a schematic diagram representing an embodiment of an electronically enabled manufactured part archive (EEMPA) 12 is shown. An embodiment of an EEMPA 12 may be broadly defined as a knowledge archive. The EEMPA 12 may contain a single record 16 or a plurality of records 16, wherein the plurality of records 16 may be organized in a hierarchical structure. It is to be understood that the record(s) 16 may include graphical indicia, alphanumerical indicia, and/or numerical indicia. In an embodiment, each record 16 is related to and/or is representative of at least a portion of a manufactured part. The records 16 may represent subassemblies such as, for example, "parts" and/or "finished products" and may include one or more "parts explosion" diagrams. As non-limitative examples, the records 16 may include one or more reference drawings, photographs, and/or cartoons.

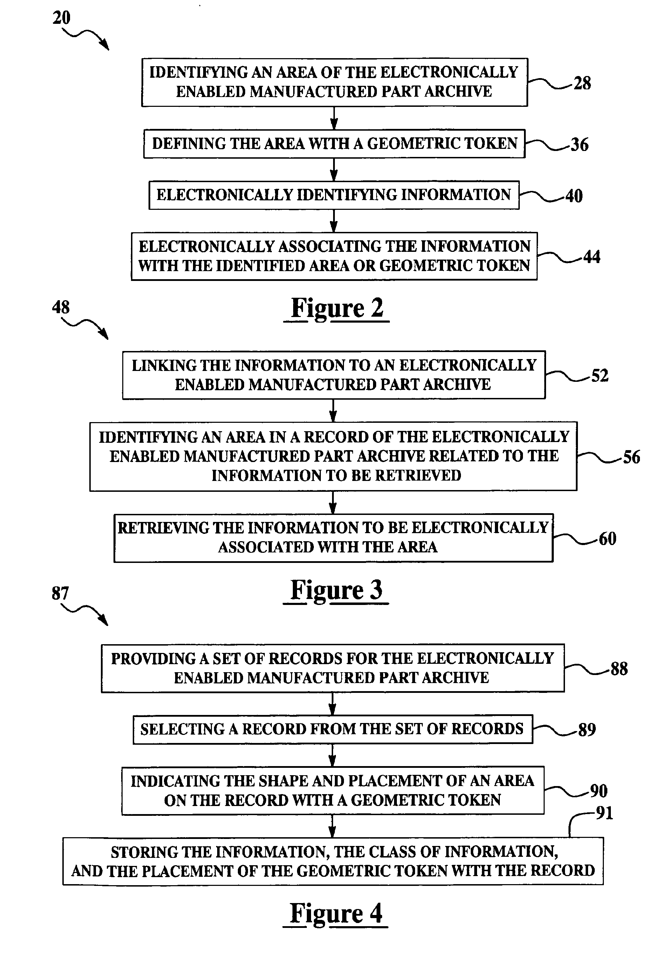

Referring now to Figs. 1 and 2 together, an embodiment of a method 20 of linking information to the electronically enabled manufactured part archive 12 includes identifying an area 24 of the EEMPA 12, as depicted at reference numeral 28; defining the area 24 with a geometric token 32, as depicted at reference numeral 36; electronically identifying information, as depicted at reference numeral 40; and electronically associating the information with the identified area 24 and/or the geometric token 32, as depicted at reference numeral 44. It is to be understood that the information may be adapted for retrieval. In an embodiment, the information relates to at least a portion of a manufactured part, wherein the manufactured part is associated with the identified area 24 of the manufactured part archive 12.

It is to be understood that, in any of the embodiment(s) discussed herein, the geometric token 32 may be representative of a class of information. As such, each of a plurality of geometric tokens 32 may represent a different class of information and may be distinguished via geometric token 32 shape, geometric token 32 size, and/or geometric token 32 color. It is to be understood that, as defined herein, "color" is intended to include any of fill color, fill patterns, fill shading, border color, border patterns, border shading, or the like, or combinations thereof. A non-limitative example of patterns includes cross hatching.

As a non-limitative example embodiment, a round geometric token 32 may identify a manufacturing problem relating to paint, a square geometric token 32 may identify a manufacturing problem relating to welding, and/or a hexagonal geometric token 32 may identify a manufacturing problem relating to a stamping issue. Thus, visually distinct geometric tokens 32 may be used to identify the class of information linked to an area 24. It may be preferred to identify a class of information when linking information to an area 24 to provide a way to later retrieve information related to only a specified class of information when searching within an EEMPA 12.

In another embodiment, a plurality of areas 24 may be identified, as depicted at reference numeral 28, and each of the areas 24 defined, as depicted at reference numeral 36, with a respective geometric token 32. Further, the information may be substantially simultaneously or sequentially electronically associated with each of the plurality of identified areas 24, each of the plurality of geometric tokens 32, and/or combinations thereof. Thus, a single piece of information may be effectively and efficiently associated with a plurality of areas 24 and/or geometric tokens 32.

Referring now to Figs. 1 and 3 together, an embodiment of a method 48 of retrieving information related to a manufactured part, includes linking the information to EEMPA 12, as depicted at reference numeral 52; identifying, with geometric token(s) 32, one or a plurality of area(s) 24 in a record 16 of the EEMPA 12 related to the information to be retrieved, as depicted at reference numeral 56; and retrieving information electronically associated with at least a portion of the area 32 (or each of the areas 32 if more than one), as depicted at reference numeral 60. The record 16 may be one of a plurality of records 16 organized in a hierarchical structure. In an embodiment, a user may identify a plurality of areas 24 with a plurality of geometric tokens 32, which plurality of geometric tokens 32 may represent one or more classes of information; and retrieve that information. It is to be understood that retrieving, as depicted at reference numeral 60, may include a request for retrieval.

In an embodiment of method 48 including a plurality of geometric tokens 32, each token 32 may represent a different class of information, and each of the plurality of geometric tokens 32 may be distinguished via at least one of geometric token 32 shape, geometric token 32 size, and/or geometric token 32 color.

Referring again to Fig. 1, as non-limitative examples, the geometric token 32 may be selected from a regular geometric shape and/or an irregular geometric shape. As such, the geometric token 32 may include circles, ovals, rectangles, squares, polygons, stars, or the like, or combinations thereof.

In an embodiment, the identified area 24 has a common feature with another area 24. A common feature may, for example, be a component or subcomponent of a manufactured part, which is referenced in two or more records 16. In another embodiment, a common feature may be a feature having a common purpose and/or design to another non-identical feature. For example, in an EEMPA 12 containing records relating to vehicles, a common feature may exist between two records 16 representative of components designed for the same function in different vehicle models. In an embodiment wherein an identified area 24 has a common feature with another area 24, retrieving information, as depicted at reference numeral 60, may further include retrieving information electronically associated with the other area 24.

Each record 16 may be a subcomponent of, and/or include a common feature with a vertically adjacent record 16. Thus, referring to Figs. 1-3, in an embodiment, if a portion of the area 68 in record 18' is defined, the associated areas 64, 72, 76 of the records 16 having a common feature with area 68 are also defined. It is to be understood that each area 64, 68, 72, 78 includes a common feature that may be defined as a "top front portion of a door frame."

In an embodiment of linking information, each associated area 64, 68, 72, 76 is effectively defined, as depicted at reference numeral 36, and is electronically associated with the information, as depicted at reference numeral 44. In an embodiment of retrieving information, information electronically associated with each associated area 64, 68, 72, 76 may be retrieved, even if the information was previously electronically associated with less than all of the associated areas 64, 68, 72, 76.

A plurality of records 16 may be organized in a hierarchical structure having at least one of vertically or horizontally adjacent records 16, as illustrated in the EEMPA 12 embodiment of Fig. 1. It is to be understood that a hierarchical structure may be organized such that at least one common feature exists between at least two records 16 in the hierarchical structure. Such a hierarchical structure may be further defined as a taxonomy.

In an embodiment of a hierarchical structure, substantially each record 16 is a subcomponent of a vertically or horizontally adjacent record 16. It is to be further understood that "substantially" each record 16 may contain a subcomponent because at least one record 16 in such a hierarchical arrangement may contain an assembly of subcomponents rather than a subcomponent. For example, record 18 of Fig. 1 is not a subcomponent of any other record 16 in the EEMPA 12; although each other record 16 is a subcomponent of a vertically adjacent record 16.

Referring still to Figs. 1, 2 and 3, defining the area 24 with the geometric token 32, as depicted at reference numerals 36 and 56, may be accomplished via any suitable means such as, for example, a mouse, a trackball, a digital pen, a keyboard, a joystick, a light pen, a touch-sensitive screen, a graphics tablet, or the like, or combinations thereof.

It is to be understood that the EEMPA 12 shown in Fig. 1 may also be described as a pictorial graphical taxonomy. In the embodiment of Fig. 1, the EEMPA 12 is divided into vertical levels: level 1 (shown at reference numeral 80), level 2 (shown at reference numeral 84), and level 3 (shown at reference numeral 86). The record 16 in level 1 is the most inclusive record 16, whereby each subsequent level 84, 86 represents subcomponents of the respective above level(s) 80, 84. As such, the records 16 of level 2 contain subcomponents of the record 16 of level 1, and the records 16 of level 3 include subcomponents of the records 16 of level 2.

As a non-limitative example, a user may desire to link data related to manufacturing issues occurring at a "top front portion of a door frame." The user may electronically define, as depicted at 36, the area 24 (in this example, the "top front portion of a door frame") with a geometric token 32, such as a circle (as illustrated at reference numeral 68) in record 18'. The user may then electronically identify the information related to the manufacturing issues, and electronically associate the information with the identified area 24.

Referring additionally now to Fig. 4, another embodiment 87 of a method for linking information to an EEMPA 12 includes providing a set of records 16 for the EEMPA 12, as depicted at reference numeral 88; selecting a record 16 from the set of records 16, as depicted at reference numeral 89; indicating the shape and placement of one or more areas 24 on the selected record 16 with one or more geometric tokens 32, which token 32 may indicate a class of information, as depicted at reference numeral 90; and storing the information, the class of information, and the placement of the geometric token 32 with the selected record 16, as depicted at reference numeral 91.

In an embodiment, the geometric token 32 is defined and placed via a graphical user interface (GUI). The parameters defining the geometric token 32 may be expressed in the record's own coordinate system. A non-limitative example of such parameters adapted to define a circle include: X-coordinate, Y-coordinate, and radius.

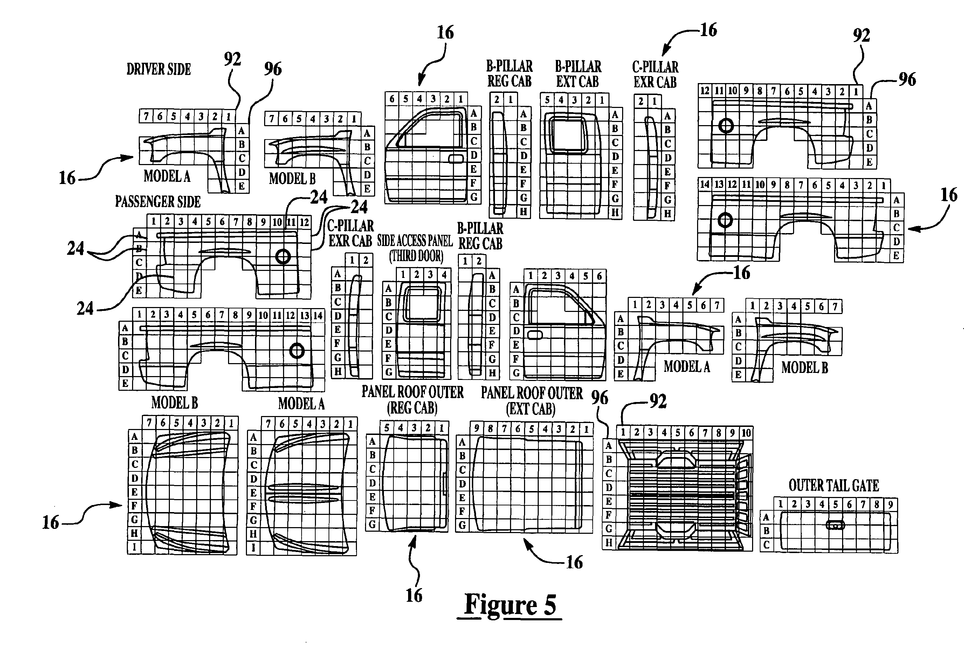

In Fig. 5, examples of an embodiment of a coordinate system are shown for a plurality of records 16. Each record 16 represents at least a portion of components or subcomponents of a manufactured part, and is divided into a plurality of areas 24 by X coordinates 92 and Y coordinates 96.

Assessing a similarity between two or more areas 24, or similarity matching, may be used to compute a similarity between two or more areas 24. Furthermore, similarity matching may provide a means to determine whether a first defined area 24 includes a common feature with one or more other defined areas 24. As such, similarity matching may be helpful in both linking information to, and retrieving information from an EEMPA 12. For example, in an embodiment of linking information to an EEMPA 12, similarity matching may be performed before electronically associating the information with the defined area 24, such that the information is effectively electronically associated with the area 24 of each record 16 having a common feature with the defined area 24. In another example of an embodiment, similarity matching may be used after the step of identifying the area 24, such that information is retrieved from each area 24 of a record 16 having a common feature with the defined area 24.

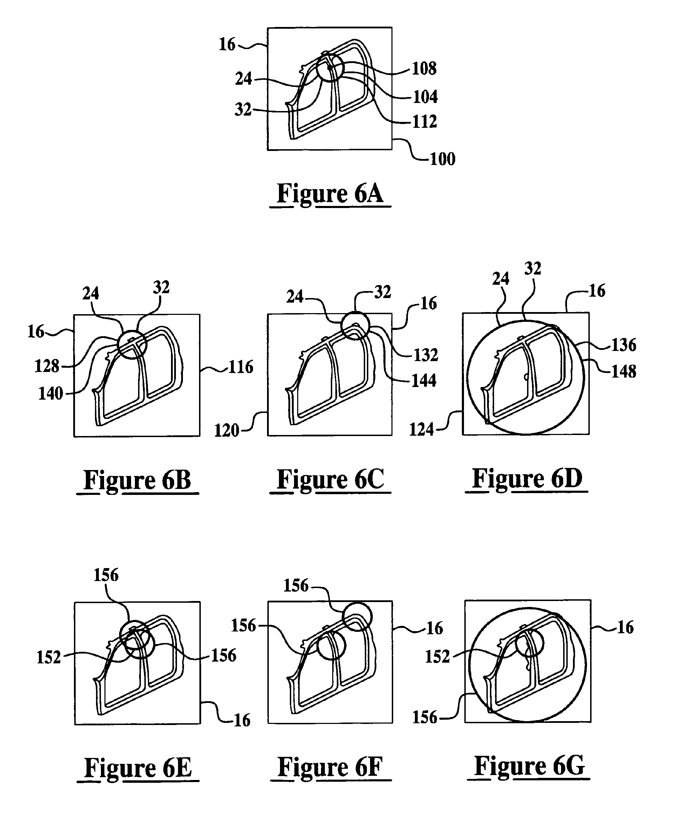

Figs. 6A-6G illustrate three examples of an embodiment of assessing the similarity between linked areas 24 in records 16. Fig. 6A shows an example record 16, 100 of an EEMPA 12 marked with an area 24, 104 having a center 108 and defined by a geometric token 32, 112. Figs. 6B-6D illustrate three records 16, respectively: Case 1 (shown at reference numeral 116), Case 2 (shown at reference numeral 120), and Case 3 (shown at reference numeral 124). Each Case 116, 120, 124 has a linked area 24, respectively, 128, 132, 136 defined by a geometric token 32, respectively, 140, 144, 148.

Similarity comparisons between each of the defined areas 128, 132, 136 of the records 116, 120, 124 and the defined area 104 of the example record 100 are shown as Figs 6E-6G, respectively. As such, each of Figs. 6E-6G illustrates a graphical representation of the similarity between the defined areas 128, 132, 136 and the example record 100 area 104.

The similarity between the example record 100 and Case 1 (reference numeral 116) is relatively high because the area of overlap 152 between the areas 104, 128 is high with respect to the area of non-overlap 156. The similarity between the example record 100 and Case 3 (reference numeral 124) is lower than that of the example record 100 and Case 1 (reference numeral 116) because the area of overlap 152 for Case 3 (reference numeral 124) is smaller with respect to the area of non-overlap 156 for the areas 104, 136. Finally, the similarity between the example record 100 and Case 2 (reference numeral 120) is even lower than that of Case 3 (reference numeral 124) because there is no overlap between the areas 104, 132.

A non-limitative embodiment of a method of assessing a similarity between a first defined area 24 and at least one other defined area 24 in an EEMPA 12 having at least one record 16 includes assessing an amount of overlap between the first defined area 24 and the other defined area(s) 24, the first defined area 24 having a common feature with the other defined area(s) 24. The method further includes normalizing the amount of overlap between the first defined area 24 and the other defined area(s) 24. The amount of overlap may be normalized by the surface areas of the first defined area 24 and the other defined area(s) 24. In an embodiment, the similarity is a number ranging from 0.0 to 1.0.

The method of assessing a similarity may further optionally include the step of organizing the plurality of records 16 such that each of the other defined area(s) 24 is electronically associated with the first defined area 24.

In an embodiment, when an area 24 is electronically associated with information, as depicted at 44, the area 24 is "inherited" through the "part of" relation by levels 80, 84, 86 above and below in the appropriate taxonomy. As such, information linked to an area 24 is effectively linked to other area(s) 24 sharing a common feature. Thus, each linked record 16, Q, is associated with a collection of linked records 16, C(Q), that represent the same location. C(Q) may be referred to as an "associated record set" for Q. It is to be noted that Q is a linked record 16 and not just a record 16. As such, C(Q) depends on the linking, as well as the record 16 that was originally linked.

With a slight abuse of notation, Q can be thought to indicate the linked area 24 of the record 16. For another linked record 16, T, to have a non-zero similarity to Q, one of the records 16 in C(Q) must be the same as (or include a common feature with) one of the records 16 in C(T). The similarity of Q to T, s(Q,T), is a number from 0.0 to 1.0. Thus, s(Q,T)=0.0 means that the locations indicated by Q and T are not close to each other; while s(Q,T)=1.0 indicates that Q and T are essentially the same. As such, s(Q,T) will generally be a number less than 1.0.

It is to be understood that the similarity function "s" need not be symmetric in its arguments. As such, if Q is the "query" (or area 24 defined for information retrieval), and T is the "target" (or area 24 linked to desired information), it is reasonable for s(Q,T) to be close to 1.0 when Q contains T, but a lesser value when T contains Q.

In an embodiment, s(Q,T) is computed from the amount of overlap of the areas 24 indicated by Q and T, normalized by the surface areas of Q and T. If either Q or T is a point, and, thus, has no area, then s(Q,T) may be max[0.0,(Dₜₕᵣₑₛ- the distance from T to Q)/ Dₜₕᵣₑₛ]. Dₜₕᵣₑₛ is defined as the maximum distance between T and Q that will result in a similarity > 0.0). Otherwise, a formula such as s(Q,T) = area(Q intersect T)/ (square root [area (Q) * area (T)]) could be used to find the similarity of Q and T. Using this formula, s(Q,T) = 1.0 if Q=T and s(Q,T) = 0.0 if (Q intersect T) is empty. Otherwise, the similarity is a number between 0.0 and 1.0.

While several embodiments have been described in detail, it will be apparent to those skilled in the art that the disclosed embodiments may be modified. Therefore, the foregoing description is to be considered exemplary rather than limiting.

## Claims

1. A method of linking information to an electronically enabled manufactured part archive, the method comprising:
identifying an area of the electronically enabled manufactured part archive;
defining the area with a geometric token;
electronically identifying the information, the information relating to at least a portion of a manufactured part which is associated with the identified area of the manufactured part archive; and
electronically associating the information with at least one of the identified area or the geometric token, wherein the information is adapted for retrieval.

2. The method of claim 1 wherein the electronically enabled manufactured part archive contains a single record, or a plurality of records organized in a hierarchical structure.

3. The method of claim 2 wherein the single record, or each of the plurality of records comprises graphical indicia, alphanumerical indicia, or combinations thereof.

4. The method of claim 1 wherein the geometric token comprises a regular geometric shape, an irregular geometric shape, or combinations thereof.

5. The method of claim 1 wherein the geometric token comprises a circle, an oval, a rectangle, a square, a polygon, a star, or combinations thereof.

6. The method of claim 1 wherein the geometric token represents a class of information.

7. The method of claim 6, further comprising a plurality of the geometric tokens, wherein each of the plurality of geometric tokens represents a different class of information, and wherein each of the plurality of geometric tokens is distinguished via at least one of geometric token shape, geometric token size, geometric token color, or combinations thereof.

8. The method of claim 1, further comprising identifying a plurality of the areas, and defining each of the plurality of the areas with a respective geometric token; and wherein the information is, substantially simultaneously or sequentially, electronically associated with at least one of:
each of the plurality of identified areas; or each of the plurality of geometric tokens.

9. The method of claim 1 wherein defining the area is accomplished via at least one of a mouse, a trackball, a digital pen, a keyboard, a joystick, a light pen, a touch-sensitive screen, a graphics tablet, or combinations thereof.

10. A method of retrieving information related to a manufactured part, the method comprising:
linking the information to an electronically enabled manufactured part archive;
identifying, with a geometric token, an area in a record of the electronically enabled manufactured part archive related to the information to be retrieved; and
retrieving the information electronically associated with at least a portion of the area.

11. The method of claim 10 wherein the record is one of a plurality of records organized in a hierarchical structure.

12. The method of claim 10 wherein the geometric token is selected from a regular geometric shape, an irregular geometric shape, and combinations thereof.

13. The method of claim 10 wherein the geometric token represents a class of information.

14. The method of claim 13, further comprising a plurality of the geometric tokens, wherein each of the plurality of geometric tokens represents a different class of information, and wherein each of the plurality of geometric tokens is distinguished via at least one of geometric token shape, geometric token size, geometric token color, or combinations thereof.

15. The method of claim 10 wherein a plurality of the areas are identified, and wherein the information electronically associated with at least a portion of each of the plurality of areas is retrieved.

16. The method of claim 10 wherein the hierarchical structure has at least one of vertically or horizontally adjacent records, and wherein the hierarchical structure organizes the plurality of records such that at least one common feature exists between at least two records in the hierarchical structure.

17. The method of claim 10 wherein the identified area has a common feature with an other area; and wherein retrieving the information further includes retrieving information electronically associated with the other area.

18. The method of claim 10 wherein identifying the area is accomplished via at least one of a mouse, a trackball, a digital pen, a keyboard, a joystick, a light pen, a touch-sensitive screen, a graphics tablet, or combinations thereof.

19. A method of assessing a similarity between a first defined area and at least one other defined area in an electronically enabled manufactured part archive having at least one record, the method comprising:
assessing an amount of overlap between the first defined area and the at least one other defined area, the first defined area having a common feature with the at least one other defined area; and
normalizing the amount of overlap between the first defined area and the at least one other defined area by surface areas of the first defined area and the at least one other defined area.
